# EUROPÄISCHE PATENTSCHRIFT

(11) **EP 3 356 201 B1**
(45) Veröffentlichungstag und Bekanntmachung des Hinweises auf die Patenterteilung: **06.01.2021**
(21) Anmeldenummer: 16774661.9
(22) Anmeldetag: 29.09.2016
(51) Int. Cl.: B62D 1/04

(54) **LENKRADSKELETT UND LENKRAD MIT BEDIENELEMENTEN SOWIE HERSTELLUNGSVERFAHREN**
STEERING WHEEL SKELETON AND STEERING WHEEL COMPRISING OPERATOR ELEMENTS, AND MANUFACTURING METHOD
OSSATURE DE VOLANT ET VOLANT POURVU D'ÉLÉMENTS DE COMMANDE, AINSI QUE PROCÉDÉ DE FABRICATION

(30) Priorität: 02.10.2015 DE 102015012702
(43) Veröffentlichungstag der Anmeldung: 08.08.2018
(73) Patentinhaber: Dalphi Metal España, S.A., 36213 Vigo (ES); PSA Automobiles SA, 78300 Poissy (FR)
(72) Erfinder: BAÑA CASTRO, Ramon, 36208 Vigo (ES); MALDE GONZÁLEZ, Jesús, Ignacio, 36320 Chapela (ES); CARBALLIDO, Rafael, 36206 Vigo-Pontevedra (ES); LEMELE, Clément, 92370 Chaville (FR); RICHEUX, Guilloux Nathalie, 91430 Igny (FR); BAUVINEAU, Laurent, 92160 Antony (FR)
(74) Vertreter: ZF Patentabteilung - DIPS
(86) Internationale Anmeldenummer: PCT/EP2016/073264
(87) Internationale Veröffentlichungsnummer: WO 2017/055455

(56) Entgegenhaltungen:
- EP-A1- 3 109 131
- DE-B3-102014 007 163
- DE-C2- 4 423 744
- DE-U1- 20 101 868

## Beschreibung

Die Erfindung betrifft ein Lenkradskelett sowie ein Lenkrad mit einem solchen Lenkradskelett. Ferner befasst sich die Erfindung mit einem Verfahren zur Herstellung eines solchen Lenkradskeletts bzw. Lenkrads.

Aus der Praxis ist eine Vielzahl unterschiedlicher Lenkradformen bekannt. Im Allgemeinen weisen Lenkräder ein Lenkradskelett aus einer Metalllegierung auf, wobei das Lenkradskelett eine Nabe und einen Lenkradkranz aufweist. Die Nabe und der Lenkradkranz sind durch mindestens eine Speiche miteinander verbunden. Das Lenkradskelett wird zur Bildung des Lenkrads mit einer Umschäumung versehen, die das metallische Skelett im Bereich der Speichen und des Lenkradkranzes im Wesentlichen vollständig ummantelt. Weit verbreitet sind Lenkräder mit drei oder vier Speichen, wobei auch 2-Speichen-Lenkräder eingesetzt werden. Seltener anzutreffen sind 1-Speichen-Lenkräder, bei welchen lediglich eine einzige Speiche die Nabe mit dem Lenkradkranz verbindet.

Der Trend geht zudem dahin, Bedienfunktionen eines Kraftfahrzeugs weitgehend durch Bedienelemente am Lenkrad zu steuern. Dazu werden entsprechende Bedienelemente unmittelbar am Lenkrad angeordnet. Bei Mehrspeichen-Lenkrädern werden die Bedienelemente meist unmittelbar an den Speichen in der Umschäumung platziert. Da die Bedienelemente bei normaler Griffposition eines Fahrers gut erreichbar sein sollen, werden üblicherweise Speichen, die in einer 3-Uhr-Position und einer 9-Uhr-Position angeordnet sind, mit den Bedienelementen ausgestattet. Diese Anordnung ist jedoch nicht bei allen Lenkradformen ergonomisch sinnvoll möglich. Insbesondere bei 1-Speichen-Lenkrädern, deren einzige Speiche in einer 6-Uhr-Position am Lenkrad angeordnet ist, sind alternative Lösungen gefordert, um Bedienelemente in ergonomisch günstiger Position am Lenkrad anzubringen.

Die DE 44 23 744 C2 schlägt dahingehend vor, Schalter als Bedienelemente unmittelbar in die Umschäumung des Lenkradkranzes einzubringen. Hier ist der für die Bedienelemente verfügbare Platz jedoch begrenzt. Die heutzutage geforderte Anzahl von Funktionen, die vom Lenkrad aus steuerbar sein sollen, kann damit nicht erreicht werden. Als Alternative schlägt die DE 44 23 744 C2 vor, entfernbare Bedieneinheiten am Lenkrad anzubringen. Bei solchen entfernbaren Bedieneinheiten ist jedoch zumindest denkbar, dass sie sich unter intensiver äußerer Krafteinwirkung auf das Fahrzeug lösen.

Aus der WO 2010/089945 A1 ist ein Lenkrad bekannt, bei welchem direkt in die Umschäumung Bedienelemente eingesetzt sind. Auch hier ist die Anzahl der anordenbaren Bedienelemente wegen der Breite des Lenkradkranzes begrenzt. Zudem weist die Umschäumung eine vergleichsweise geringe Stabilität auf und gibt bei der Bedienung der Bedienelemente nach. Dies führt zu einem unerwünschten haptischen Gefühlseindruck.

Die DE 201 01 868 U1, auf der der Oberbegriff der unabhängigen Ansprüche 1 und 9 beruht, offenbart ein Fahrzeuglenkrad umfassend ein Skelett mit einem Kranz, einem Nabenabschnitt sowie mehreren Speichen, welche den Kranz mit dem Nabenabschnitt verbinden. Das Skelett ist in diesem Fall aus einem Druckgussmaterial hergestellt, wobei in das Druckgussmaterial eine Armierung eingebettet ist.

Die nachveröffentlichte EP 3 109 131 A1 zeigt ein Lenkradskelett mit einem umlaufenden Lenkradkranz und einem im 6-Uhr-Bereich des Lenkradkranzes angeordneten Arm, der sich ausgehend vom Lenkradkranz radial einwärts bis zu einem freien Ende erstreckt und an seinem freien Ende einen Vibrationsgenerator aufweist.

Die Aufgabe der Erfindung besteht darin, eine Möglichkeit zu schaffen, Bedienelemente an einem Lenkrad, insbesondere an einem 1-Speichenlenkrad, stabil anzubringen. Konkret ist es Aufgabe der Erfindung, ein Lenkrad mit einem solch stabil angebrachten Bedienelement sowie ein dazu geeignetes Herstellungsverfahren anzugeben.

Erfindungsgemäß wird diese Aufgabe im Hinblick auf ein Lenkradskelett durch den Gegenstand des Patentanspruchs 1, im Hinblick auf das Lenkrad durch den Gegenstand des Patentanspruchs 9 und im Hinblick auf das Herstellungsverfahren durch den Gegenstand des Patentanspruchs 11 gelöst.

Zur Lösung der eingangs genannten Aufgabe sieht die Erfindung insbesondere ein Lenkradskelett mit einer Nabe und einem Lenkradkranz vor, wobei die Nabe und der Lenkradkranz durch wenigstens eine, vorzugsweise durch genau eine, Speiche miteinander verbunden sind. Am Lenkradkranz, insbesondere an einem Innenumfang des Lenkradkranzes, ist wenigstens ein Vorsprung zur Aufnahme eines Bedienelements, insbesondere einer Multifunktions-Schaltereinheit, angeordnet, wobei sich der wenigstens eine Vorsprung vom Lenkradkranz zu einem freien Ende erstreckt, wobei der wenigstens eine Vorsprung wenigstens eine Öffnung zur Fixierung eines Bedienelements aufweist und/oder wobei der wenigstens eine Vorsprung zwischen einer 1-Uhr-Position und einer 4-Uhr-Position und/oder zwischen einer 8-Uhr-Position und einer 11-Uhr-Position angeordnet ist.

Die Idee der Erfindung besteht also darin, das Lenkradskelett selbst mit einem Vorsprung auszustatten, der geeignet ist, wenigstens ein Bedienelement aufzunehmen. Indem das Lenkradskelett an sich bereits einen Vorsprung zur Aufnahme eines Bedienelements aufweist, wird eine sichere Montageposition für ein oder mehrere Bedienelemente bereitgestellt.

Der am Lenkradskelett angeordnete Vorsprung bietet eine gute Stabilität und ermöglicht so die Aufnahme einer Vielzahl von Bedienelementen. Dies kommt der Forderung nach, immer mehr Funktionen eines Kraftfahrzeugs über Lenkradbedienelemente zu steuern.

Der Vorsprung ist vorzugsweise einstückig mit dem Lenkradkranz ausgebildet. Dies hat kostenreduzierende Vorteile bei der Herstellung des Lenkradskeletts und verbessert zudem die Stabilität des Lenkradskeletts. Ferner wird durch die einstückige Ausbildung des Vorsprungs mit dem Lenkradkranz eine stabile Aufnahme für ein oder mehrere Bedienelemente geschaffen.

Der Lenkradkranz kann eine Kranzebene aufspannen. Insbesondere kann der Lenkradkranz in einer Ebene angeordnet sein, die im eingebauten Zustand eines Lenkrads im Wesentlichen senkrecht zu einer Lenksäule ausgerichtet ist. Der Vorsprung erstreckt sich vorzugsweise in der Kranzebene. Mit anderen Worten kann vorgesehen sein, dass sich der Vorsprung zur Mitte des Lenkradkranzes hin erstreckt, dabei jedoch hauptsächlich in der Kranzebene ausgerichtet ist. Damit ist gewährleistet, dass am Lenkrad im Bereich des Vorsprungs angeordnete Bedienelemente für einen Fahrer gut zugänglich sind. Insbesondere ist der Vorsprung vorzugsweise so ausgerichtet, dass ein Fahrer bei normaler Griffposition ohne Umgreifen mit einem Finger oder dem Daumen die im Bereich des Vorsprungs angeordneten Bedienelemente erreicht.

Der Vorsprung kann plattenartig ausgebildet sein. Insbesondere kann der Vorsprung eine Platte bilden, die sich im Wesentlichen in der Kranzebene erstreckt. Die Platte kann eine gleichmäßige Dicke aufweissen. Generell bietet die Platte eine vergleichsweise große Oberfläche zur Anordnung von ein oder mehreren Bedienelementen. Die Platte bietet sich insbesondere an, wenn eine Vielzahl von Bedienelementen, beispielsweise Schalter oder Wippen, am Lenkrad ausgebildet sein sollen.

Die wenigstens eine Speiche des Lenkradskeletts ist in einer bevorzugten Ausführungsform in einer 6-Uhr-Position des Lenkradskeletts angeordnet. Mit anderen Worten zeigt die wenigstens eine Speiche vorzugsweise bei Geradeaus-Fahrt eines Fahrzeugs von der Nabe im Wesentlichen senkrecht nach unten.

Der Vorsprung ist in einer Ausgestaltung der Erfindung zwischen einer 1-Uhr-Position und einer 4-Uhr-Position, und/ oder alternativ zwischen einer 8-Uhr-Position und einer 11-Uhr-Position, vorzugsweise jedoch in einer 3-Uhr-Position oder einer 9-Uhr-Position, angeordnet sein. Damit wird der üblichen Griffstellung beim Führen eines Fahrzeugs Rechnung getragen. Insbesondere sind diese Positionen geeignet, um ohne ein Umgreifen die Bedienelemente gut erreichen zu können.

In einer weiteren Ausgestaltung der Erfindung weist der Vorsprung wenigstens eine Öffnung zur Fixierung eines Bedienelements auf. Auf diese Weise kann das Bedienelement direkt mit dem Lenkradskelett verbunden werden, was die Stabilität des gesamten Lenkrads erhöht. Überdies kann die Öffnung oder eine weitere Öffnung zur Aufnahme von Umschäumungsmaterial vorgesehen sein. Dies ist vorteilhaft, um die Verbindung zwischen dem Lenkradskelett und einer Umschäumung weiter zu festigen.

Besonders bevorzugt ist es, wenn das Lenkradskelett zwei Vorsprünge aufweist, die voneinander beabstandet am Lenkradkranz angeordnet sind. Dies ermöglicht die Anbringung weiterer Bedienelemente, so dass insgesamt eine erhöhte Anzahl von Funktionen am Lenkrad bereitgestellt werden kann.

Vorzugsweise sind die beiden Vorsprünge zueinander achsensymmetrisch am Lenkradkranz ausgebildet. Die Symmetrieachse verläuft dabei durch eine 12-Uhr-Position und eine 6-Uhr-Position des Lenkradkranzes. Insbesondere ist vorteilhaft vorgesehen, dass die Symmetrieachse durch ein Zentrum, insbesondere die Nabe, des Lenkradskeletts verläuft. Die gegenüberliegende Anordnung der Vorsprünge ermöglicht es, Bedienteile so am Lenkrad anzuordnen und fest mit dem Lenkradskelett zu verbinden, dass ein Fahrer mit beiden Händen Bedienteile erreichen kann. Dies ist ergonomisch wertvoll und erhöht wiederum die Anzahl von Funktionen, die am Lenkrad bedient werden können. Ebenso können weitere Vorsprünge, insbesondere mehr als zwei Vorsprünge, vorgesehen sein, die weitere Bedienelemente aufnehmen.

In bevorzugter Ausgestaltung weisen die beiden gegenüberliegend angeordneten Vorsprünge jeweils ein freies Ende oder eine freie Endkante auf, die so voneinander beabstandet sind, dass zwischen den Vorsprüngen ein Airbagmodul platzierbar ist. Insbesondere kann das Airbagmodul an der Nabe befestigt sein. Der Freiraum zwischen den Vorsprüngen kann jedenfalls so bemessen sein, dass ein sich entfaltender Airbag zwischen den Vorsprüngen vortritt und sich zwischen einem Fahrer und den Vorsprüngen aufspannt.

Bei einer weiteren bevorzugten Ausgestaltung des erfindungsgemäßen Lenkradskeletts ist vorgesehen, dass die Nabe, die wenigstens eine Speiche, der Lenkradkranz und der wenigstens eine Vorsprung, insbesondere die beiden Vorsprünge, als einstückiges Spritzgussteil ausgebildet sind. Das Spritzgussteil kann aus einer Magnesiumlegierung oder einer Aluminiumlegierung gebildet sein. Damit ist eine schnelle und kostengünstige Herstellung des Lenkradskeletts, insbesondere trotz der relativ teuren Materialien, realisierbar.

Um das Lenkradskelett weiter zu verstärken, kann vorgesehen sein, dass der Lenkradkranz wenigstens eine Verstärkungseinlage, insbesondere aus Stahl, aufweist. Es ist auch denkbar, dass der Lenkradkranz mehrere Verstärkungseinlagen umfasst. Die Verstärkungseinlage wird vorzugsweise in die Spritzgussform eingelegt, bevor die Magnesiumlegierung oder die Aluminiumlegierung in die Form eingespritzt wird. Dadurch wird die Verstärkungseinlage fest in den Lenkradkranz integriert. Das Spritzgussmaterial umschließt damit die Verstärkungseinlage zumindest teilweise. Durch die integrale Einbindung der Verstärkungseinlage in den Lenkradkranz wird dieser effizient versteift ohne das Gewicht des Lenkrads übermäßig zu erhöhen.

Das erfindungsgemäße Lenkradskelett kann in einer besonders bevorzugten Ausgestaltung eine einzige Speiche aufweisen. Mit anderen Worten ist es bevorzugt, das Lenkradskelett als 1-Speichen-Lenkradskelett bzw. zur Bildung eines 1-Speichen-Lenkrads zu gestalten. Die einzige Speiche kann sich dabei in einer 6-Uhr-Position von der Nabe zum Lenkradkranz erstrecken. In dieser Konstellation ist es besonders vorteilhaft, wenn das Lenkradskelett zwei Vorsprünge aufweist, die in einer 9-Uhr-Position und einer 3-Uhr-Position angeordnet sind. Die Vorsprünge ragen vorzugsweise in den Lenkradkranz hinein bzw. weisen zur Nabe. Konkret können sich die beiden Vorsprünge im Wesentlichen entlang einer Speichenrichtung zweier oberer Speichen eines 3-Speichen-Lenkrades erstrecken. Die Vorsprünge weisen jedoch ein freies Ende auf und sind mit der Nabe nicht verbunden. Die Vorsprünge sind geeignet, um Bedienelemente aufzunehmen bzw. zu stützen. Insbesondere ermöglichen es die Vorsprünge, am späteren Lenkrad einen Aufnahmebereich für Bedienelemente auszubilden.

Ein nebengeordneter Aspekt der Erfindung betrifft ein Lenkrad, insbesondere ein 1-Speichen-Lenkrad, mit einem zuvor beschriebenen Lenkradskelett. Bei dem Lenkrad ist das Lenkradskelett mit einer Umschäumung ummantelt. Durch das Umschäumen wird besonders einfach ein angenehm zu greifendes und im Crashfall dämpfendes Lenkrad bereitgestellt.

Bei dem erfindungsgemäßen Lenkrad ist vorgesehen, dass an dem Vorsprung des Lenkradskeletts wenigstens ein Bedienelement befestigt ist. Es ist allerdings auch möglich, dass das Bedienelement nur an der Umschäumung befestigt ist, der Vorsprung des Lenkradskeletts jedoch dafür sorgt, dass ein entsprechender Aufnahmeraum für ein Bedienelement am Lenkrad bereitgestellt wird. Insofern hat der Vorsprung auch eine formgebende Funktion für das spätere Umschäumen. Der Aufnahmebereich für Bedienelemente ist somit nicht ausschließlich aus dem Material der Umschäumung gebildet, sondern wird zusätzlich durch den Vorsprung, der integraler Bestandteil des Lenkradskeletts ist, verstärkt. Dies erhöht die Stabilität des Lenkrads insgesamt und verbessert die Bedienqualität beim Betätigen der Bedienelemente.

Das Bedienelement kann eine Schaltwippe und/oder eine Multifunktionsschaltereinheit aufweist. Schaltwippen werden üblicherweise verwendet, um bei Automatikgetrieben Gänge hoch- oder herunterzuschalten. Derartige Schaltwippen können insbesondere auf einer Rückseite eines Lenkrads angeordnet sein. Schaltwippen stellen einen vergleichsweise großen Hebelweg bereit, so dass die Anordnung von Schaltwippen an dem hier vorgeschlagenen Vorsprung am Lenkradskelett besondere Stabilitätsvorteile bietet.

Multifunktionsschaltereinheiten können Drückschalter, Kippschalter, Drehschalter oder Rollschalter aufweisen. Es ist auch möglich, eine Kombination der vorgenannten Schalterarten in einer Multifunktionsschaltereinheit zu vereinen.

Insbesondere können mehrere Drückschalter und ein Rollschalter vorgesehen sein. Es ist auch möglich, dass der Rollschalter gleichzeitig eine Drückschalterfunktion umfasst. Ebenso können Drück-/Drehschalter vorgesehen sein. Die Multifunktionsschaltereinheit kann insgesamt mehrere Schalter unterschiedlicher Bauart (Druckschalter, Drehschalter, Rollschalter, usw.) aufweisen.

Zur Sicherheit für einen Fahrer ist in einer bevorzugten Variante des Lenkrads ein Airbagmodul vorgesehen. Das Airbagmodul wird vorzugsweise von der Nabe des Lenkradskeletts getragen. Konkret ist vorgesehen, dass die Nabe eine Aufnahmeeinrichtung für ein Airbagmodul aufweist. Insbesondere kann ein Airbagmodul mit der Nabe des Lenkradskeletts verrastbar sein.

Das Lenkrad kann je nach Ausstattungswunsch ein Leder und/oder ein Furnier aufweisen. Das Leder und/oder das Furnier sind vorzugsweise um die Umschäumung angeordnet. Mit anderen Worten kann in bevorzugten Varianten des erfindungsgemäßen Lenkrads die Umschäumung mit einem Leder und/oder einem Furnier, insbesondere einem Holzfurnier, ummantelt sein. Es ist auch möglich, die Umschäumung nicht zu ummanteln. In diesem Fall wird die Umschäumung vorzugsweise strukturiert, um eine haptisch angenehme Oberfläche zu schaffen.

Ein weiterer nebengeordneter Aspekt der Erfindung betrifft ein Verfahren zur Herstellung eines zuvor beschriebenen Lenkradskeletts oder Lenkrads. Bei dem Verfahren wird eine Negativform des Lenkradskeletts bereitgestellt, die Ausbuchtungen aufweist. Die Ausbuchtungen weisen eine Negativform der Vorsprünge an der Innenseite des Lenkradkranzes auf. Die Negativform kann zweigeteilt sein. Jedenfalls ist vorgesehen, dass in die, ggf. geschlossene, Negativform ein Spritzgussmaterial unter Druck eingespritzt wird, wobei vor oder nach einem Schritt des Umschäumens des Lenkradskelettes an dem zumindest einen Vorsprung ein Bedienelement, insbesondere eine Schaltwippe und/oder eine Multifunktions-schaltereinheit befestigt wird. Das Spritzgussmaterial besteht vorzugsweise aus einer Magnesiumlegierung oder einer Aluminiumlegierung. Bei einer zweiteiligen Negativform können die beiden Teile anschließend voneinander getrennt werden, so dass das fertiggespritzte Lenkradskelett aus der Negativform herausfällt.

Bei einer bevorzugten Variante des Herstellungsverfahrens, die insbesondere bei der Herstellung von 1-Speichen-Lenkrädern zum Einsatz kommt, wird vor dem Einspritzen des Spritzgussmaterials wenigstens eine Verstärkungseinlage, insbesondere aus Stahl, in die Negativform eingelegt. Die Verstärkungseinlage wird mit dem Spritzgussmaterial zumindest teilweise umspritzt. Das Einbinden einer Verstärkungseinlage erhöht die Stabilität des Lenkrads. Dabei ist insbesondere vorgesehen, die Stabilität des Lenkradkranzes zu erhöhen, so dass die Verstärkungseinlage vorzugsweise im Lenkradkranz angeordnet wird.

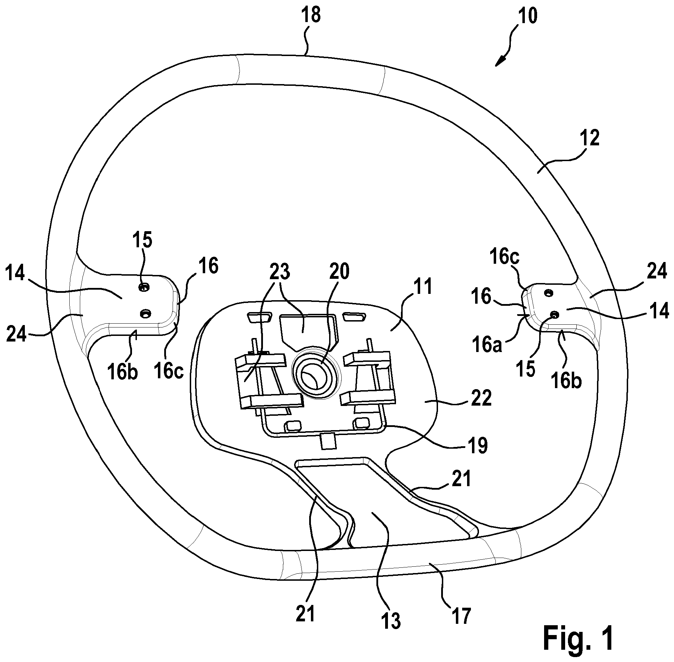

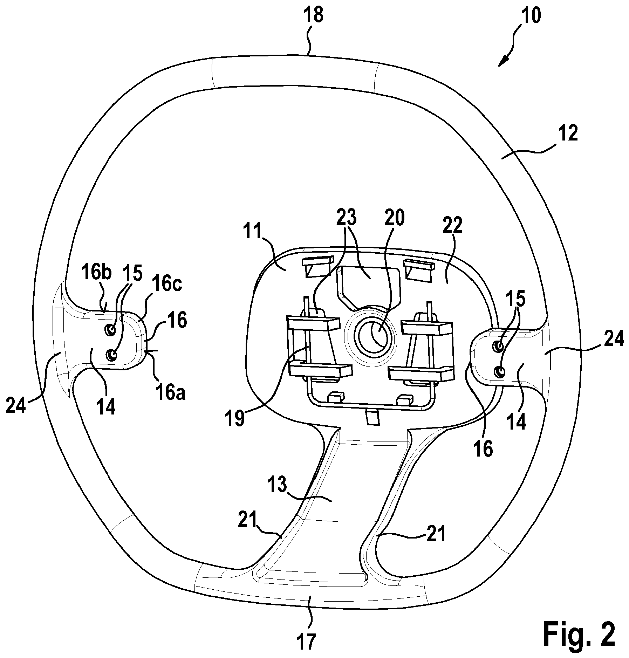

Die Erfindung wird im Folgenden anhand eines Ausführungsbeispiels unter Bezugnahme auf die beigefügten, schematischen Zeichnungen näher erläutert. Darin zeigen die Fig. 1 und 2 jeweils unterschiedliche perspektivische Ansichten des erfindungsgemäßen Lenkradskeletts.

In den beigefügten Zeichnungen ist jeweils ein Lenkradskelett 10 erkennbar, das eine Nabe 11, einen Lenkradkranz 12 und eine Speiche 13 aufweist. Die Speiche 13 verbindet die Nabe 11 und den Lenkradkranz 12. Der Lenkradkranz 12 spannt eine Kranzebene auf. Die Nabe 11 ist im Wesentlichen durch eine Nabenplatte 22 gebildet, die etwa parallel zur Kranzebene ausgerichtet ist. Die Speiche 13 verbindet die Nabe 11 und den Lenkradkranz 12, wobei sich die Speiche 13 quer zwischen der Ebene der Nabenplatte 22 und der Kranzebene erstreckt. Die Speiche 13 weist an ihren Seiten jeweils einen Außensteg 21 auf. Der Außensteg 21 ist durch eine Materialverstärkung an den Rändern der Speiche 13 erkennbar.

Die Speiche 13 verläuft im Wesentlichen in einer 6-Uhr-Position des Lenkradskeletts. Dabei werden die Uhr-Positionen bei dem Lenkradskelett 10 im Einbauzustand in einem Kraftfahrzeug, insbesondere einem Automobil, betrachtet. Bei Geradeaus-Fahrt des Kraftfahrzeugs weist die Speiche 13 im Wesentlichen senkrecht nach unten, also in eine 6-Uhr-Richtung.

Die Nabe 11 umfasst einen Lenksäulenanschluss 20, der im Wesentlichen das Drehzentrum des Lenkrads bzw. Lenkradskeletts 10 definiert. Außerdem ist an der Nabe 11, insbesondere der Nabenplatte 22, eine Haltefeder 19 angebracht. Die Haltefeder 19 ermöglicht die Fixierung eines Airbagmoduls an der Nabenplatte 22. Dazu weist das Airbagmodul entsprechende Haken auf, die mit der Haltefeder 19 formschlüssig und kraftschlüssig zusammenwirken, um das Airbagmodul fest am Lenkradskelett 10 zu fixieren. Ferner sind am Lenkradskelett 10 Durchbrüche 23 vorgesehen, die einerseits zur Gewichtseinsparung und andererseits zur Durchführung von elektrischen Anschlusskabeln genutzt werden.

Der Lenkradkranz 12 ist im Wesentlichen ringförmig und vorzugsweise, wie in den Figuren dargestellt, zumindest in den seitlichen Bereichen (2 bis 4 Uhr Bereich und 8 bis 10 Uhr Bereich) kreisringförmig ausgebildet. Der Lenkradkranz 12 weist jedoch in der hier beschriebenen Ausführungsform optional eine untere Abflachung 17 und eine obere Abflachung 18 auf, bei der der Lenkradkranz gerade oder mit einem erheblich größeren Radius gestaltet ist. Diese Abflachungen sind nicht zwingend erforderlich, aus Design-Aspekten jedoch gelegentlich gewünscht. Die untere Abflachung erleichtert zudem den Einstieg in ein Fahrzeug.

Ferner weist der Lenkradkranz 12 des Lenkradskeletts 10 zwei Vorsprünge 14 auf. Die Vorsprünge 14 sind auf eine 3-Uhr-Position und einer 9-Uhr-Position gegenüberliegend zueinander angeordnet. Insbesondere sind die Vorsprünge 14 achsensymmetrisch bezüglich einer Symmetrieachse am Lenkradkranz 12 angeordnet. Die Symmetrieachse verläuft im Wesentlichen durch die 12-Uhr-Position und die 6-Uhr-Position des Lenkradskeletts 10. Im vorliegenden Fall sind die Vorsprünge 14 diametral gegenüberliegend angeordnet. Es ist dabei auch möglich, dass die Vorsprünge 14 nach oben oder unten parallel versetzt am Lenkradkranz 12 ausgebildet sind.

Die Vorsprünge 14 sind freischwebend ausgebildet. Konkret ragen die Vorsprünge 14 im Wesentlichen in der Kranzebene nach innen zur Nabe 11 vor und bilden dabei jeweils ein freies Ende 16. Das freie Ende 16 ist insbesondere durch eine Endfläche 16a gebildet. Die Endfläche 16a verbindet zwei parallele Seitenflächen 16b des Vorsprungs 14. Der Übergang zwischen der Endfläche 16a und jeweils einer Seitenfläche 16b ist durch eine Verrundung 16c gebildet.

Die Vorsprünge 14 sind jeweils plattenartig ausgebildet bzw. bilden eine Platte. Insbesondere weisen die Vorsprünge 14 eine einheitliche Dicke auf. Konkret weisen die Vorsprünge 14 eine Dicke auf, die kleiner als der Durchmesser des Lenkradkranzes 12 ist. Entsprechend ist ein Übergangsbereich 24 vorgesehen, der einen gleichmäßigen Übergang von den Vorsprüngen 14 in den Lenkradkranz mit entsprechenden Abrundungen bildet. Alle Kanten des plattenartigen Vorsprünge 14 sind vorzugsweise verrundet.

Die Dicke der Vorsprünge 14 entspricht im Wesentlichen der Breite der Seitenflächen 16b und der Endfläche 16a. Die Vorsprünge 14 weisen vorzugsweise eine Länge und eine Höhe auf, wobei die Höhe in vertikaler und die Länge in horizontaler Richtung ermittelt werden. Wie in den Zeichnungen erkennbar ist, ist die Länge der Vorsprünge 14 größer als deren Höhe.

In den Vorsprüngen 14 sind jeweils zwei Öffnungen 15 ausgebildet. Die Öffnungen 15 ermöglichen die Befestigung von Bedienelementen direkt am Lenkradskelett 10. Dazu können die Bedienelemente beispielsweise mit dem Lenkradskelett 10 über die Öffnungen 15 verschraubt werden.

Als Bedienelemente kommen insbesondere Schaltwippen in Frage, die vorzugsweise auf einer Rückseite des Lenkradskeletts 10 angeordnet sind. Es ist auch möglich, Multifunktionsschaltereinheiten anzubringen, die vorzugsweise auf einer Vorderseite des Lenkradskeletts 10 fixiert werden. Die Vorsprünge 14 können jeweils sowohl Schaltwippen auf ihrer Rückseite und Multifunktionsschaltereinheiten auf ihrer Vorderseite tragen.

Wie in den Fig. 1 und 2 gut erkennbar ist, deuten die Vorsprünge 14 im Wesentlichen Speichen des Lenkradskeletts 10 an. Im Unterschied zu Speichen sind die Vorsprünge 14 jedoch nicht mit der Nabe 11 verbunden sondern weisen jeweils freie Enden 16 auf. Insofern ermöglichen es die Vorsprünge 14, freischwebend wirkende Bedienelemente am Lenkrad anzuordnen ("floating satellite switches or paddles").

Die Nabe 11, der Lenkradkranz 12, die Speiche 13 und die Vorsprünge 14 sind vorzugsweise einstückig als Spritzgussteil ausgebildet. Der Lenksäulenanschluss 20 und die Haltefeder 19 können hingegen separate Bauteile sein, die mit dem Lenkradskelett 10 verbunden sind. Vorzugsweise ist das Lenkradskelett 10 aus einer Magnesiumlegierung oder Aluminiumlegierung gebildet. In den Lenkradkranz 12 können ein oder mehrere Verstärkungseinlagen integriert sein. Verstärkungseinlagen sind meist als Stahleinlagen ausgebildet. Die Stahleinlagen können ein Rundprofil aufweisen.

Das in den Figuren dargestellte Lenkradskelett 10 wird vorzugsweise zumindest im Bereich der Speiche 13 und des Lenkradkranzes 12 mit einer Umschäumung versehen. Die Umschäumung kann ferner durch ein Leder oder ein Furnier, beispielsweise ein Holzfurnier, ummantelt werden. Im Bereich der Vorsprünge 14 werden vorzugsweise Bedienelemente angeordnet und mit dem Lenkradskelett 10, insbesondere dem jeweiligen Vorsprung 14, fest verbunden.

### Bezugszeichenliste

- 10: Lenkradskelett
- 11: Nabe
- 12: Lenkradkranz
- 13: Speiche
- 14: Vorsprung
- 15: Öffnung
- 16: freies Ende
- 17: untere Abflachung
- 18: obere Abflachung
- 19: Haltefeder
- 20: Lenksäulenanschluss
- 21: Außensteg
- 22: Nabenplatte
- 23: Durchbruch
- 24: Übergangsbereich

## Patentansprüche

1. Lenkradskelett (10) mit
einer Nabe (11) und einem Lenkradkranz (12), die durch wenigstens eine Speiche (13) miteinander verbunden sind,
wobei am Lenkradkranz (12), insbesondere an einer Innenseite des Lenkradkranzes (12), wenigstens ein Vorsprung (14) zur Aufnahme eines Bedienelements angeordnet ist, und
wobei sich der wenigstens eine Vorsprung (14) vom Lenkradkranz (12) im Wesentlichen in der Kranzebene nach innen zu einem freien Ende (16) erstreckt, **dadurch gekennzeichnet,**
**dass** der wenigstens eine Vorsprung (14) wenigstens eine Öffnung (15) zur Fixierung eines Bedienelements aufweist und/oder
**dass** der wenigstens eine Vorsprung (14) zwischen einer 1-Uhr-Position und einer 4-Uhr-Position und/oder zwischen einer 8-Uhr-Position und einer 11-Uhr-Position angeordnet ist.

2. Lenkradskelett (10) nach Anspruch 1, **dadurch gekennzeichnet, dass** der Vorsprung (14) einstückig mit dem Lenkradkranz (12) ausgebildet ist, und/oder dass der Vorsprung (14) plattenartig ausgebildet ist.

3. Lenkradskelett (10) nach Anspruch 1 oder 2, **dadurch gekennzeichnet, dass** der Lenkradkranz (12) eine Kranzebene aufspannt, wobei sich der Vorsprung (14) in der Kranzebene oder zumindest im Wesentlichen parallel dazu erstreckt.

4. Lenkradskelett (10) nach einem der vorhergehenden Ansprüche, **dadurch gekennzeichnet, dass** der Vorsprung (14) in einer 3-Uhr-Position und/oder einer 9-Uhr-Position angeordnet ist.

5. Lenkradskelett (10) nach einem der vorhergehenden Ansprüche, **gekennzeichnet durch** zwei Vorsprünge (14), die voneinander beabstandet am Lenkradkranz (12) angeordnet sind, wobei vorzugsweise die Vorsprünge (14) zueinander achsensymmetrisch am Lenkradkranz (12) ausgebildet sind, und wobei die Symmetrieachse **durch** eine 12-Uhr-Position und eine 6-Uhr-Position des Lenkradkranzes (12) verläuft.

6. Lenkradskelett (10) nach einem der vorhergehenden Ansprüche, **dadurch gekennzeichnet, dass** die Nabe (11), die wenigstens eine Speiche (13), der Lenkradkranz (12) und der wenigstens eine Vorsprung (14) als einstückiges Spritzgussteil ausgebildet sind, wobei vorzugsweise das Spritzgussteil aus einer Magnesiumlegierung oder einer Aluminiumlegierung gebildet ist.

7. Lenkradskelett nach einem der vorhergehenden Ansprüche, **dadurch gekennzeichnet, dass** der Lenkradkranz (12) wenigstens eine Verstärkungseinlage, insbesondere aus Stahl, aufweist.

8. Lenkradskelett (10) nach einem der vorhergehenden Ansprüche, **gekennzeichnet durch** eine einzige Speiche (13) und/oder **dadurch**, dass die eine Speiche (13) in einer 6-Uhr-Position und/oder in einem Winkel zu einer Kranzebene des Lenkrades angeordnet ist.

9. Lenkrad, insbesondere Einspeichen-Lenkrad, mit einem Lenkradskelett (10) nach dem Oberbegriff des Anspruchs 1 oder nach einem der vorhergehenden Ansprüche,
wobei das Lenkradskelett (10) zumindest im Bereich der zumindest einen Speiche (13) und/oder des Lenkradkranzes (12) mit einer Umschäumung ummantelt ist,
**dadurch gekennzeichnet, dass** an dem Vorsprung (14) des Lenkradskeletts (10) wenigstens ein Bedienelement befestigt ist, wobei vorzugsweise das Bedienelement eine Schaltwippe und/oder eine Multifunktionsschaltereinheit aufweist.

10. Lenkrad nach Anspruch 9, **dadurch gekennzeichnet, dass** die Umschäumung zumindest teilweise mit einem Leder und/oder einem Furnier ummantelt ist, und/oder **dadurch gekennzeichnet, dass** zumindest in einem Bereich des Lenkradkranzes eine Heizeinrichtung angeordnet ist.

11. Verfahren zur Herstellung eines Lenkradskeletts (10) nach einem der Ansprüche 1 bis 8 oder eines Lenkrads nach Anspruch 9 oder 10,
wobei eine Negativform des Lenkradskeletts (10) bereitgestellt wird, die Ausbuchtungen in Form der Vorsprünge (14) an der Innenseite des Lenkradkranzes (12) aufweist, und anschließend ein Spritzgussmaterial, insbesondere eine Magnesiumlegierung oder eine Aluminiumlegierung, unter Druck in die Negativform eingespritzt wird,
wobei vor oder nach einem Schritt des Umschäumens des Lenkradskelettes (10) an dem zumindest einen Vorsprung (14) ein Bedienelement, insbesondere eine Schaltwippe und/oder eine Multifunktionsschaltereinheit befestigt wird.

12. Verfahren nach Anspruch 11, **dadurch gekennzeichnet, dass** vor dem Einspritzen des Spritzgussmaterials wenigstens eine Verstärkungseinlage, insbesondere aus Stahl, in die Negativform eingelegt und mit dem Spritzgussmaterial zumindest teilweise umspritzt wird.

## Claims

1. A steering wheel skeleton (10) comprising
a hub (11) and a steering wheel rim (12) which are interconnected by at least one spoke (13),
wherein at the steering wheel rim (12), especially at an inside of the steering wheel rim (12), at least one projection (14) is arranged for receiving an operating element, and
wherein the at least one projection (14) extends substantially from the steering wheel rim (12) in the rim plane inwardly to a free end (16), **characterized in that**
the at least one projection (14) includes at least one opening (15) for fixing an operating element and/or
the at least one projection (14) is arranged between a 1 o'clock position and a 4 o'clock position and/or between an 8 o'clock and an 11 o'clock position.

2. The steering wheel skeleton (10) according to claim 1, **characterized in that** the projection (14) is formed integrally with the steering wheel rim (12) and/or **in that** the projection (14) is plate-shaped.

3. The steering wheel skeleton (10) according to claim 1 or 2, **characterized in that** the steering wheel rim (12) spans a rim plane with the projection (14) extending in the rim plane or at least substantially in parallel thereto.

4. The steering wheel skeleton (10) according to any one of the preceding claims, **characterized in that** the projection (14) is arranged in a 3 o'clock position and/or in a 9 o'clock position.

5. The steering wheel skeleton (10) according to any one of the preceding claims, **characterized by** two projections (14) which are arranged to be spaced apart from each other on the steering wheel rim (12), wherein preferably the projections (14) are formed to be axially symmetrical on the steering wheel rim (12) and wherein the axis of symmetry extends across a 12 o'clock position and a 6 o'clock position of the steering wheel rim (12).

6. The steering wheel skeleton (10) according to any one of the preceding claims, **characterized in that** the hub (11), the at least one spoke (13), the steering wheel rim (12) and the at least one projection (14) are formed as an integral injection molded part, wherein preferably the injection molded part is made of a magnesium alloy or an aluminum alloy.

7. The steering wheel skeleton according to any one of the preceding claims, **characterized in that** the steering wheel rim (12) includes at least one reinforcing insert, especially made of steel.

8. The steering wheel skeleton (10) according to any one of the preceding claims, **characterized by** one single spoke (13) and/or in that the one spoke (13) is arranged in a 6 o'clock position and/or at an angle relative to a rim plane of the steering wheel.

9. A steering wheel, especially single-spoke steering wheel, comprising a steering wheel skeleton (10) according to the preamble of claim 1 or according to any one of the preceding claims,
wherein the steering wheel skeleton (10) is surrounded by a foam coating at least in the area of the at least one spoke (13) and/or the steering wheel rim (12),
**characterized in that** at least one operating element is mounted to the projection (14) of the steering wheel skeleton (10), wherein the operating element preferably includes a rocker and/or a multi-functional switch unit.

10. The steering wheel according to claim 9, **characterized in that** the foam coating is surrounded at least partially by leather and/or a veneer, and/or **characterized in that** a heating means is arranged at least in an area of the steering wheel rim.

11. A method of manufacturing a steering wheel skeleton (10) according to any one of the claims 1 to 8 or a steering wheel according to claim 9 or 10,
wherein a negative mold of the steering wheel skeleton (10) is provided which includes bulges in the form of projections (14) on the inside of the steering wheel rim (12) and subsequently an injection molding material, especially a magnesium alloy or an aluminum alloy, is injected under pressure into the negative mold,
wherein before or after a step of foam-coating of the steering wheel skeleton (10) an operating element, especially a rocker and/or a multi-functional switch unit, is mounted on the at least one projection (14).

12. The method according to claim 11, **characterized in that** before injecting the injection molding material at least one reinforcing insert, especially made of steel, is inserted into the negative mold and is at least partly coated with the injection molding material.

## Revendications

1. Armature de volant (10) avec
un moyeu (11) et une jante de volant (12) reliés l'un à l'autre par au moins un rayon (13),
pour lequel au moins une saillie (14) est disposée sur la jante de volant (12) pour recevoir un élément de commande, en particulier à l'intérieur de la jante de volant (12), et
pour lequel la au moins une saillie (14) s'étend vers l'intérieur depuis la jante du volant (12) sensiblement dans le plan de la jante jusqu'à une extrémité libre (16), **caractérisée en ce que**
l'au moins une saillie (14) présente au moins une ouverture (15) pour fixer un élément de commande et/ou
**en ce que** l'au moins une saillie (14) est disposée entre une position à 1 heure et une position à 4 heures et/ou entre une position à 8 heures et une position à 11 heures.

2. Armature de volant (10) selon la revendication 1, **caractérisé en ce que** la saillie (14) est formée d'un seul tenant avec la jante du volant (12), et/ou que la saillie (14) est en forme de plaque.

3. Armature de volant (10) selon la revendication 1 ou 2, **caractérisé en ce que** la jante de volant (12) forme un plan de la jante, pour laquelle la saillie (14) s'étend dans le plan de jante ou au moins sensiblement parallèle à celui-ci.

4. Armature de volant (10) selon l'une des revendications précédentes, **caractérisé en ce que** la saillie (14) est disposée en position 3 heures et/ou en position 9 heures.

5. Armature de volant (10) selon l'une quelconque des revendications précédentes, **caractérisé en ce que** deux saillies (14) sont disposées espacées l'une de l'autre sur la jante du volant (12), pour lequel les saillies (14) sont de préférence symétriques axialement l'une par rapport à l'autre sur la jante du volant (12) et pour lequel l'axe de symétrie passe par une position à 12 heures et une position à 6 heures de la jante du volant (12).

6. Armature de volant (10) selon l'une des revendications précédentes, **caractérisé en ce que** le moyeu (11), le au moins un rayon (13), la jante de volant (12) et la au moins une saillie (14) sont réalisés sous la forme d'une pièce monobloc moulée par injection, pour lequel de préférence, la pièce moulée par injection est formée d'un alliage de magnésium ou d'un alliage d'aluminium.

7. Armature de volant selon l'une des revendications précédentes, **caractérisé en ce que** la jante de volant (12) présente au moins un insert de renfort, notamment en acier.

8. Armature de volant (10) selon l'une quelconque des revendications précédentes, **caractérisé en ce qu'**un seul rayon (13) et/ou **en ce que** le seul rayon (13) est disposé en position 6 heures et/ou avec un angle par rapport à un plan de la jante du volant.

9. Volant, en particulier un volant à rayons, avec une armature de volant (10) selon les termes de la revendication 1 ou selon l'une des revendications précédentes,
pour lequel l'armature de volant (10) est recouverte d'une mousse au moins dans la région de l'au moins un rayon (13) et / ou de la jante de volant (12),
**caractérisé en ce qu'**au moins un élément de commande est fixé à la saillie (14) de l'armature du volant (10), l'élément de commande ayant de préférence un interrupteur à bascule et/ou une unité de commande multifonction.

10. Volant selon la revendication 9, **caractérisé en ce que** la mousse est au moins partiellement revêtue d'un cuir et / ou d'un placage, et/ou **caractérisé en ce qu'**un dispositif de chauffage est disposé au moins dans une zone de la jante du volant.

11. Procédé de fabrication d'une armature de volant (10) selon l'une des revendications 1 à 8 ou d'un volant selon la revendication 9 ou 10,
pour lequel un moule de l'armature du volant (10) est fourni, qui présente des renflements sous la forme de saillies (14) à l'intérieur de la jante du volant (12), puis un matériau de moulage par injection, en particulier un alliage de magnésium ou un alliage d'aluminium, est injecté sous pression dans le moule,
pour lequel un élément de commande, en particulier un interrupteur à bascule et/ou une unité de commande multifonction, est fixé à la au moins une saillie (14) avant ou après une étape de moussage du squelette du volant (10).

12. Procédé selon la revendication 11, **caractérisé en ce qu'**avant l'injection du matériau de moulage par injection, au moins un insert de renfort, notamment en acier, est inséré dans le moule et est au moins partiellement surmoulé avec le matériau de moulage par injection.
